# EUROPÄISCHE PATENTSCHRIFT

(11) **EP 1 386 788 B1**
(45) Veröffentlichungstag und Bekanntmachung des Hinweises auf die Patenterteilung: **16.08.2006**
(21) Anmeldenummer: 03014338.2
(22) Anmeldetag: 26.06.2003
(51) Int. Cl.: B60R 16/02

(54) **Bordnetz für Kraftfahrzeuge mit einem Cockpit-Modul und Verfahren zur Montage eines Cockpit-Moduls**
Vehicle board network with a cockpit-module and mounting process of a cockpit module
Réseau de bord d'un véhicule avec un module de tableau de bord et procédé de montage d'un module de tableau de bord

(30) Priorität: 03.08.2002 DE 10235578
(43) Veröffentlichungstag der Anmeldung: 04.02.2004
(73) Patentinhaber: Bayerische Motoren Werke Aktiengesellschaft, 80809 München (DE)
(72) Erfinder: Wagner, Armin, 85757 Karlsfeld (DE)

(56) Entgegenhaltungen:
- EP-A- 1 055 564
- US-A- 4 750 265
- US-A- 5 324 203
- US-A- 6 048 020

## Beschreibung

Bei der Herstellung von Kraftfahrzeugen besteht zunehmend das Bestreben, einzelne Teile nicht mehr separat zu montieren, sondern mehrere Teile zu einer vormontierten Baueinheit zusammenzufassen und dann im Fahrzeug einzubauen. Dabei ist das sog. Cockpit-Modul der montageintensivste Umfang. Hier häufen sich die verschiedensten Aggregate zur Betätigung, Steuerung und Kontrolle des Fahrzeuges. Aber auch die dem Komfort dienenden Einrichtungen, wie Heizung und Lüftung, Radio usw. zählen dazu.

Zur elektrischen Verbindung des Moduls mit dem übrigen Bordnetz ist bei einem derartigen Cockpit-Modul aus der EP 0 124 093 B1 bekannt, einen Vielfachstecker vorzusehen, der nach dem Einbau die im Modul angeordneten elektrischen Umfänge mit dem übrigen Hauptkabelsatz verbindet. Es ist dazu erforderlich, jede elektrische Komponente am Vielfachstecker anzuschließen, der wiederum mit einem entsprechenden Gegenstecker zusammenwirkt. Der Gegenstecker wiederum ist im Hauptkabelsatz eingeschleift. Der Aufwand für den elektrischen Anschluss des Cockpit-Moduls gestaltet sich angesichts der zunehmenden Anzahl elektrischer Komponenten dabei besonders aufwändig. Zudem besteht auf Grund der Vielzahl von körperlichen Kontakten und elektrischen Kontaktstellen ein zunehmendes Kontaktzuverlässigkeits- und Gewichtsproblem für das gesamte, die Cockpit- und die übrige Elektrik umfassende Bordnetz.

Die US-A-4 750 265 geht aus von einem bekannten Verfahren zum Einbau von Verdrahtung in ein Kraftfaftrzeug. Hierbei wird ein Träger zum Anbringen an eine Kraftfahrzeugkarosserie vorgesehen. Die Kraftfahrzeugkarosserie weist eine Motorraumseite und eine Fahrgastraumseite auf. Elektrische Ausrüstungskomponenten werden auf dem Träger angebracht und mit einem ersten Kabelbaum verbunden. Der erste Kabelbaum weist ein erstes Verbindungsstück zur Verbindung mit einem zweiten Kabelbaum in dem Motorraum des Kraftfahrzeugs und ein zweites Verbindungsstück zur Verbindung mit mindestens einem der Ausrüstungskomponenten auf. Um den Einbau in stärkerem Maße durch Maschinen vornehmen zu können und den erforderlichen Bauraum zu verringern wird zur Weiterbildung dieses Stands der Technik vorgeschlagen, dass die Ausrüstungskomponenten auf der Fahrgastseite des Trägers angebracht werden und dass der Träger mit einer Öffnung bzw. einem Fenster versehen wird, über die bzw. das das erste Verbindungsstück den ersten Kabelbaum mit dem zweiten Kabelbaum verbindet.

Aus der EP-A2-0 281 376 ist ein Bordnetz für Kraftfahrzeuge mit einem ersten Teilumfang als Bestandteil eines vormontierbaren Cockpit-Moduls, mit einem davon elektrisch abtrennbaren zweiten Teilumfang, und mit einem ersten Steuergerät, das elektrischen Komponenten (Klima, Radio), die im Cockpit-Modul enthalten sind, zugeordnet ist, bekannt. Das Bordnetz weist elektrische Verbindungen zum zweiten Teilumfang auf. Das erste Steuergerät bildet eine Schnittstelle zwischen dem ersten und dem zweiten Teilumfang. Ein zweites Steuergerät, das elektrischen Komponenten (Klima, Radio), die im Cockpit-Modul enthalten sind, zugeordnet ist und das elektrische Verbindungen zum zweiten Teilumfang aufweist, bildet zusammen mit dem ersten Steuergerät die Gesamt-Schnittstelle des Cockpit-Moduls zwischen dem ersten und dem zweiten Teilumfang. Die Steuergeräte bzw. "control modules" haben die Aufgabe das Funktionieren von Glühlampen oder anderen an sog. "output modules" angeschlossenen Verbrauchern des Fahrzeugs zu überwachen.

Aufgabe der vorliegenden Erfindung ist es, das Bordnetz eines Kraftfahrzeugs so zu gestalten, dass für die elektrische Einbindung eines vormontierten Cockpit-Moduls ein geringer Aufwand an Kontakten erforderlich ist und sich daraus zwangsläufig eine Erhöhung der Kontaktzuverlässigkeit ergibt. Gleichzeitig soll der Montageaufwand gering gehalten sein.

Erfindungsgemäß wird die Aufgabe gelöst durch einen neuartigen Aufbau des Bordnetzes mit den Merkmalen, wie sie im Patentanspruch 1 angegeben sind.

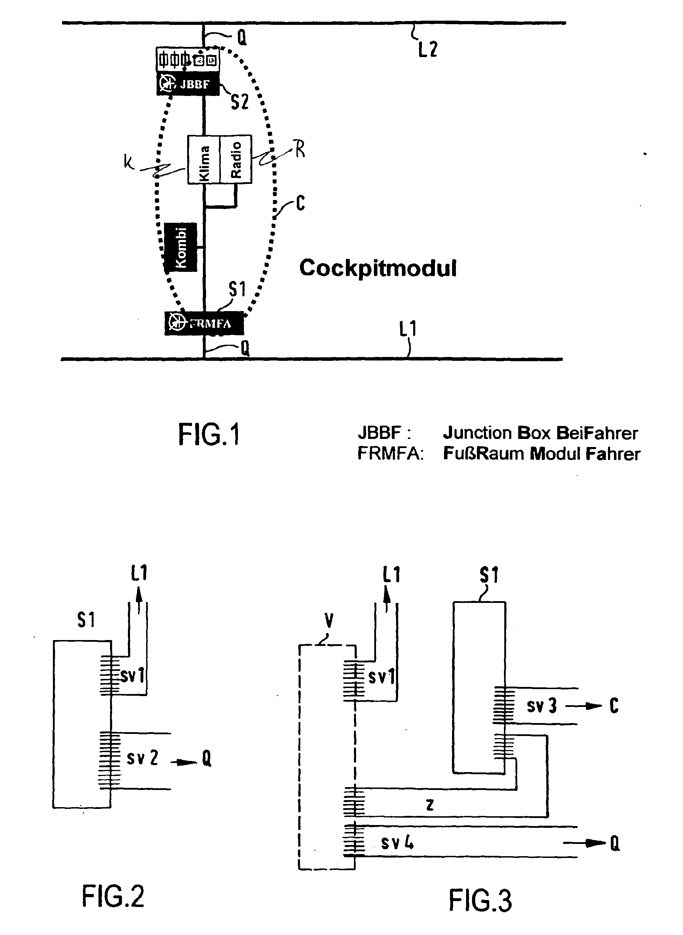

Das erfindungsgemäße Bordnetz besitzt wie an sich üblich, eine Schnittstelle zum Cockpit-Modul, die in der Regel als elektrischer Steckverbinder ausgebildet ist. Durch die Anordnung und die Ausbildung der Steuergeräte an und als Bestandteil der Schnittstelle werden elektrische Kontaktverbindungen eingespart. Dies wird an Hand der Fig. 1, 2 und 3 erläutert:

Fig. 1 zeigt schematisch ein Bordnetz eines Kraftfahrzeugs, das beispielsweise eine in etwa H-förmige Struktur besitzt. Darin befinden sich zwei parallele und außermittig verlaufenden Leitungs-Längsäste L1 und L2 und ein die Längsäste verbindenden Leitungs-Querast Q. Dieser verläuft in einem Cockpit-Modul C. In den beiden Knotenpunkten des Querastes mit den Längsästen angeordnet ist jeweils ein Steuergerät S1 und S2, über das die elektrischen Verbindungen des Querastes Q mit dem jeweiligen Längsast L1 bzw. L2 zumindest teilweise verlaufen. Hierzu werden diese elektrischen Verbindungen mittels Steckverbinder hergestellt, die in entsprechende Steckeraufnahmen des jeweiligen Steuergeräts eingesteckt werden.

Es seien nun die in Fig. 2 dargestellten Steckverbindungen des Steuergeräts S1 zum Längsast L1 und zum Querast Q betrachtet. Diese Verbindungen bestehen aus einem Umfang sv1 des Steuergeräts S1 zum Längsast L1 und einem Umfang sv2 zum Querast Q. Die Umfänge sv1 und sv2 bestehen in der Regel jeweils aus mehreren Steckverbindern. Die daran angeschlossenen elektrischen Leitungen sind angedeutet dargestellt. Sie führen (für sv1) zu ebenfalls nicht dargestellten elektrischen Komponenten außerhalb des Cockpit-Moduls C bzw. (für sv2) zu elektrischen Komponenten im Cockpit-Modul. Letztere sind nicht vollständig dargestellt. Lediglich das Kombi(-instrument), das Radio und die Klima(-anlage) sind gezeigt.

Eine konventionelle Verkabelung, wie sie in Fig. 3 gezeigt ist, enthält an der Trennstelle zwischen Cockpit-Modul C und dem Längsast L1 sowie zum Anschluß des Steuergeräts S1 eine Vielzahl von Steckverbindern, die zusammen als Steckverbindereinheit V dargestellt sind.

Es ergeben sich dabei folgende Umfänge:

Ein erster Umfang sv3 vom Cockpit-Modul C zum Steuergerät S1,
ein Umfang s4 für den Anschluß des Querastes Q über die Steckverbindereinheit V am Längsast L1 sowie ein weiterer Umfang z für den Anschluß des Steuergeräts S1 über die Steckverbindereinheit V am Längsast L1. Das Steuergerät S1 seinerseits ist über mehrere Steckverbinder sv3 innerhalb des Cockpit-Moduls angeschlossen.

Ein Vergleich von Fig. 2 und 3 ergibt, dass der Umfang sv4 (Fig. 3) in sv2 (Fig. 2) und in sv1 (Fig. 2 und 3) enthalten ist. Es handelt sich dabei um den Umfang, der in Fig. 2 durch S1 durchgeschleiften Leitungsumfänge. Der in sv2 (Fig. 2) gegenüber sv4 noch verbleibende Umfang ist in der Regel identisch mit dem Umfang sv3 (Fig. 3).

Somit ergibt sich gegenüber der konventionellen Verkabelung der vollständige Wegfall der Steckverbindereinheit V und der z Steckverbinder für S1 sowie der zugehörigen elektrischen Leitungen für diese z Steckverbinder. Allein bezogen auf diese z Steckverbinder ergibt sich bei der Erfindung eine Einsparung von insgesamt 2z-Steckverbindem. Sei z=10, fallen somit 20 Steckverbinder weg.

Hinzu kommt die Verringerung des Verkabelungsaufwands innerhalb des Steuergeräts S1. Da die z Steckverbinder wegfallen, fallen auch die zu diesen führenden elektrischen Leitungen innerhalb des Steuergeräts S1 weg. Die zentrale Verarbeitungseinheit (in der Regel ein Mikroprozessor), der quasi einen Teil der Schnittstelle bildet, benötigt um z weniger Anschlusskontakte.

Das erfindungsgemäße Verfahren zur Montage eines den Leitungs-Querast enthaltenden Cockpit-Moduls besteht im wesentlichen aus wenigen, nachfolgend angegebenen Montageabläufen: Das Modul wird außerhalb des Kraftfahrzeugs mit den zugehörigen Komponenten versehen, anschließend in das Fahrzeug eingesetzt und anschließend mit den bereits im Fahrzeug angeordneten Steuergeräten verbunden.

Bei den beiden Steuergeräten, die bei der dargestellten vorteilhaften Ausgestaltung der Erfindung gemeinsam die komplette Schnittstelle zwischen Cockpit-Modul und dem übrigen Bordnetz bilden, handelt es sich beispielsweise um das Fahrer-Fussraummodul (S1) und die Beifahrer-Junktionbox (S2). Diese Steuergeräte kontrollieren folgende Funktionen: Die Schaltung des Außenlichtes, der Betrieb der Windschutzscheiben- und der Leuchtenreinigungsanlage, die Zentralverriegelungsanlage, der Betrieb der Fensterheber sowie der Heiz- und Klimaanlage. Die Erfindung ermöglicht, das Cockpit-Modul C mit dem übrigen Bordnetz mit einem Minimum an Steckverbindern zu verbinden. Neben der Montagefreundlichkeit ergibt sich dadurch ein hohes Maß an Kontaktsicherheit und damit an elektrischer Zuverlässigkeit. S1 bzw. S2 können Bestandteil des Cockpit-Moduls C sein und mit diesem gemeinsam in das Fahrzeug montiert werden oder aber unabhängig vom Cockpit-Modul C montiert werden. Das erfindungsgemäße Bordnetz ermöglicht die Vormontage des Cockpit-Moduls und damit eine erhebliche Reduzierung des Montageumfangs im Werk. Dies ist auf Grund der gewählten Struktur ohne zusätzliche Schnittstellen möglich.

## Patentansprüche

1. Bordnetz für Kraftfahrzeuge, mit einem ersten Teilumfang (Q) als Bestandteil eines vormontierbaren Cockpit-Moduls (C), mit einem davon elektrisch abtrennbaren zweiten Teilumfang (L1, L2), und mit einem ersten Steuergerät (S1), das elektrischen Komponenten (K, R), die im Cockpit-Modul enthalten sind, zugeordnet ist und das elektrische Verbindungen zum zweiten Teilumfang (L1, L2) aufweist,
wobei das erste Steuergerät (S1) eine Schnittstelle zwischen dem ersten (Q) und dem zweiten Teilumfang (L1, L2) bildet,
dass ein zweites Steuergerät (S2), das elektrischen Komponenten (Klima, Radio), die im Cockpit-Modul (C) enthalten sind, zugeordnet ist und das elektrische Verbindungen zum zweiten Teilumfang (L1, L2) aufweist, zusammen mit dem ersten Steuergerät (S1) die Gesamt-Schnittstelle des Cockpit-Moduls zwischen dem ersten (Q) und dem zweiten Teilumfang (L1, L2) bildet,
die Steuergeräte (S1, S2) demnach die komplette Schnittstelle zwischen dem Cockpit-Modul und dem übrigen Bordnetz bilden und die Steuergeräte (S1, S2) in dem Cockpit-Modul (C) angeordnet sind, und
die Steuergeräte (S1, S2) mindestens den Betrieb der Heiz- und Klimaanlage des Fahrzeugs kontrollieren bzw. steuern.

## Claims

1. A vehicle on-board power system comprising a first part-assembly (Q) forming a component of a pre-mountable cockpit module (C), an electrically separable second part-component (L1, L2) and a first control unit (S1) which is associated with electric components (K, R) in the cockpit module and comprises the electric connections to the second part-assembly (L1, L2),
wherein the first control unit (S1) is an interface between the first (Q) and the second (L1, L2) part-assembly,
a second control unit (S2) associated with the electric components (air-conditioning, radio) in the cockpit module (C), and comprising the electric connections to the second part-assembly (L1, L2), together with the first control unit (S1) forms the total interface in the cockpit module between the first (Q) and the second (L1, L2) part-assembly,
the control units (S1, S2) accordingly form the complete interface between the cockpit module and the rest of the power system and the control units (S1, S2) are disposed in the cockpit module (C), and
the control units (S1, S2) monitor or control at least the operation of the heating and air-conditioning system of the vehicle.

## Revendications

1. Réseau de bord pour véhicules automobiles doté d'un premier volume partiel (Q) faisant partie d'un module de tableau de bord (C) préassemblable, d'un deuxième volume partiel (L1, L2) pouvant en être séparé électriquement et d'un premier contrôleur (S1) associé aux composants électriques compris dans le module de tableau de bord et présentant des liaisons électriques au deuxième volume partiel (L1, L2),
le premier contrôleur (S1) formant une interface entre le premier (Q) et le deuxième volume partiel (L1, L2),
un deuxième contrôleur (S2) associé aux composants électriques (climatisation, radio) compris dans le module de tableau de bord (C) et présentant des liaisons électriques au deuxième volume partiel (L1, L2) formant l'interface totale du module de tableau de bord entre le premier (Q) et le deuxième volume partiel (L1, L2) conjointement avec le premier contrôleur (S1),
les contrôleurs (S1, S2) formant par conséquent l'interface complète entre le module de tableau de bord et le reste du réseau de bord et les contrôleurs (S1, S2) étant disposés dans le module de tableau de bord (C), et
les contrôleurs (S1, S2) contrôlant et/ou pilotant au moins le fonctionnement du chauffage et de la climatisation du véhicule.
